# EUROPEAN PATENT APPLICATION

(11) **EP 4 360 901 A1**
(43) Date of publication of application: **01.05.2024**
(21) Application number: 23020282.2
(22) Date of filing: 07.06.2023
(51) Int. Cl.: B42D 25/337, B42D 25/305, B41M 3/14, G06T 1/00, H04N 1/00, H04N 1/32, G06K 19/06

(54) **A SECURITY ELEMENT AND A DATA CARRIER**

(30) Priority: 08.06.2022 PL 44141822
(71) Applicant: Polska Wytwornia Papierow Wartosciowych S.A., 00-222 Warszawa (PL)
(72) Inventor: Dymala, Piotr, 00-222 Warszawa (PL)
(74) Representative: Marcinska-Porzuc, Aleksandra

(57) **Abstract**

The invention relates to a security element composed of a final picture, the spatial frequencies of which comprise a hidden picture, and the final picture has the form of a matrix of sub-pictures, created from the matrix with the hidden picture after the thresholding, consisting of at least two color pixels arranged such that, when reading in the frequency space, the hidden picture is presented, where every pixel in the matrix with the hidden picture after the thresholding is mapped with a particular sub-picture, and all the pixels of the same color included in the matrix with the hidden picture after the thresholding are mapped with the same sub-picture. The invention also relates to a data carrier on/on which a security element is placed.

## Description

### Field

The object of the invention is a security element and a data carrier in Ion which the security element according to the invention is placed. The security element has anti-photocopying features and hidden steganographic images.

### Background

Valuable products, particularly securities such as banknotes, cheques, passports, driving licenses, ID cards, certificates of authenticity, licenses, and also revenue stamps, and other secured documents, frequently are aimed by counterfeiters and individuals wishing to fabricate false copies thereof or to modify data contained therein. Valuable products of this type are usually equipped with several visible and naked-eye invisible protection means. These protection means are intended to check the authenticity of such valuable objects. The term protection means is understood as a feature that is impossible to reproduce precisely by making a copy in visible light, for example, by using standard equipment for copying or scanning.

Exemplary protection means include numbering, guilloche lines, a protective thread, watermarks, steganography, relief background, rosette, microprinting, UV-reactive ink, anti-photocopying background, background with the iris transition effect, or a hologram. Also, one knows to use objects exhibiting effects invisible to the human eye, for instance, materials having magnetic properties, like magnetic ink. Also, protection means exist with different optical properties in the form of a translucent feature. Both sides of the document have complementary pictures precisely arranged relative to each other so that if the document is kept toward the light, the rear picture fits exactly into the spaces of the front picture. Also, one knows protection means having an optically variable appearance, i.e., their appearance is different under different viewing angles; for example, two sets of lines will be subjected to mutual tessellation making it hindering the light transmission through the protection means and making it appear dark. Under other angles, the two sets of lines will be mutually aligned to a higher or lower extent enabling light transmission through the device and making it appear bright. Moreover, one uses various subtractive color mixing. The visual effect exhibited by protection means of this type is very difficult or impossible to copy using available reproduction techniques, like copying. However, all these protection means exhibit various drawbacks. For example, the effect of the dark/bright change may be mimicked with metallic ink. The visual effect of some protection means is relatively small. The patterns of traditional translucent features have to be precisely arranged relative to each other to make the pictures recognizable. The completed pictures are not recognizable if the patterns provided on both sides of the device are misaligned. Moreover, luminescent inks are becoming more available on the market and, therefore, are available for potential counterfeiters.

One of the most common forms of securing documents in the High-Security Printing industry (documents of a high safety level) is the use of protected backgrounds. Usually, these are geometrical shapes or lines printed using offset printing, with parameters only available on top-class machines for secured printing. The characteristic feature is the line width which may be as small as 10 microns in secured printing, whereas it is difficult to have less than 100 microns in commercial printing. There is no raster in secured printing. Instead, one uses lines or vectors. On the contrary, the whole picture is created from rasters in commercial printing. When reproducing on common use devices (scanners, office printers, etc.), it is impossible to reproduce them ideally, this being exhibited by thickening the drawing, the presence of not printed areas, the moiré effect, and other visual defects. The other commonly used form of securing documents is to hide a steganographic picture.

### State of the Art

From EP 2 724 331, one knows a method for producing a secured document containing a parental picture coding a hidden picture that is a grayscale picture, wherein one converts the hidden picture into a set of plates, and for every such plate one generates representative scalar quantities, one determines corresponding spatial frequencies of lines based on particular mapping, one creates corresponding plates of the parental picture based on particular spatial frequencies of lines, one creates the parental picture from the plates of a parental picture based on particular ordering, and one derives the parental picture coding the hidden picture. The line patterns have spatial frequencies corresponding to the average gray values corresponding to the hidden picture's plates. Embedding the visible picture within the parental picture affects the thickness of every selected line section so that it is selectively increased or decreased. Moreover, the generation of the parental picture includes generating a picture of the white noise, partially based on a probabilistic variable or based on a vanishing function where a value of the vanishing function decreases along with the distance from a particular point and based on a periodical function, where a value of the periodical function varies periodically along with the distance from a particular point depending on the spatial frequency of the parental picture, and includes binarization of an intermediate function according to a particular threshold value. The embedding of the parental picture within the secured document includes printing the parental picture on the substrate of the secured document using a first ink visible in a first illumination spectrum, wherein the first ink is also visible in a second illumination spectrum differing from the first illumination spectrum. Moreover, the method includes printing a noise mask on the substrate of the secured document so that it is not aligned with the parental picture, using a second ink visible in the second illumination spectrum, wherein the parental picture is visible independently on the noise mask in the first illumination spectrum, and it is only visible in combination with the noise mask in the second illumination spectrum, and, optionally, graphical elements of the noise mask are characterized in that the spatial frequencies are within the range of the spatial frequencies of the parental picture. According to the method, optionally, one performs the Fourier transform of the parental picture and the inverse Fourier transform of a filtered picture, wherein the filtered picture is generated based on the convolution of the spatial domain representation of the parental picture and the spatial domain representation of the decoding filter, wherein the filtered picture comprises a set of representative scalar quantities.

EP 1 048 168 discloses a method and a steganographic algorithm hiding a first picture 1 in a second picture 2. However, a special filter is needed for reading, which a user may not always have at hand when necessary. EP 1 554 700 describes another solution that hides a picture using the moiré effect. Also, a dedicated filter is needed to verify it. Another nuisance results from visual features since the printed picture comprises predefined strips that can't be adapted to a graphical project. With the dynamic development of digital cameras, scanners, and reproducing devices, reproducing a classical background is no longer an unbeatable barrier for counterfeiters.

Manual/static thresholding is known in the art, which has a single threshold value irrespective of an input picture. In the known thresholding, depending on the size of a hidden picture and its location (the frequency), the picture obtained by the IFFT algorithm may be very bright or dark. However, after static thresholding, it may turn out that 80% or 90% of pixels will be black or white. The protection means itself would be effective, but visually, just after the replacement process, 90% of lines would be turned in one direction. Therefore, a drawback of this solution is the impossibility of designing a final picture. Moreover, obtaining, after the thresholding, a matrix in which 80% or 90% of pixels are of one color gives a final picture that is not very attractive visually.

Depending on the size and the shape of the final picture to be obtained, the obtained grayscale will be different: brighter or darker. Thus, no single unique thresholding value would be effective in any conditions.

Therefore, the aim of the present invention is to obtain a protection means of a high safety level, which will be easy to verify by a user but difficult to produce by counterfeiters.

Thus, the aim of the invention is to increase the safety level of data carriers by hiding a hidden picture in spatial frequencies of a final picture placed on the data carrier.

Also, the aim of the invention is to obtain automatic thresholding of a picture with a hidden picture by comparing characteristic features of every pixel in a matrix with the hidden picture against a predefined brightness index or a given color coverage index in order to obtain a coverage parameter closest to a given value that is responsible for obtaining the final picture of selected shape and color. Thanks to automatic thresholding, obtaining any arbitrary shape of the final picture becomes possible, for instance, such that 50% of lines in the final picture are turned in one direction and the other 50% in another.

### Summary

This invention relates to a security element that consists of a final picture, the spatial frequencies of which comprise a hidden picture, and the final picture has the form of a matrix of sub-pictures, which was created from the matrix with the hidden picture after the thresholding. The matrix with the hidden picture consists of at least two color pixels arranged such that, when reading in the frequency space, the hidden picture is presented, where every pixel in the matrix with the hidden picture is, after the thresholding, mapped with a particular sub-picture, and all the pixels of the same color comprised within the matrix with the hidden picture after the thresholding are mapped with the same sub-picture. According to the invention, a sub-picture may be a vector line tilted by a given angle, a vector picture, a shape, an alphanumerical symbol, or any graphical elements.

Preferably, colored pixels are pixels of different colors and/or single-color pixels but of different shades of the same color and/or single-color pixels but of different gray shades and/or black and white pixels.

Preferably, the security element has two-color pixels, in particular black and white. Preferably, also the matrix with the hidden picture after the thresholding is two-color, and every pixel of a first color constitutes a first sub-picture, and every pixel of a second color constitutes a second sub-picture. Also, it is possible that the same sub-pictures, which are mapping the same color, are modified and/or differ from each other. Therefore, the same sub-picture assigned to the same color may be placed in the matrix in the same way and/or may be arranged differently and/or has another area and/or is turned by another angle or is a non-printed spot.

Preferably, in the security element, pixels of different colors or of different grayscale shades of the same color have the same sub-pictures, which are turned by different angles, where a particular angle denotes another color or another grayscale shade of the same color. Especially preferably, in a securing element, a sub-picture has the form of at least one line of a particular color selected from a color range on a background of another color selected from a color range, and the line may have a different slope angle, and the slope angle defines the pixel color. Also, preferably, in the securing element, the sub-picture has the form of at least one line of a particular color of a first grayscale shade on a background of the same color and of a different grayscale shade, and the line may have a different slope angle, and the slope angle defines the grayscale shade of the same colored pixel. Preferably, in the securing element, a pixel of a first color is mapped with a sub-picture in the form of a line, where the slope angle is -45 degrees relative to the lower edge of the document, and a pixel of a second color is mapped with a sub-picture in the form of a line, where the slope angle is +45 degrees relative to the lower edge of the document. Optionally, in the securing element, a pixel of a first color is replaced with a sub-picture in the form of a line, where the slope angle is 0 degrees relative to the lower edge of the document, and a pixel of a second color is replaced with a sub-picture in the form of a line, where the slope angle is +90 degrees relative to the lower edge of the document. In the securing element, every black pixel constitutes the first sub-picture, and every white pixel constitutes the second sub-picture. In the securing element, it is also possible that a black pixel is mapped with a first sub-picture, whereas a white pixel is mapped with a second sub-picture as a non-printed spot, or the white pixel is mapped with a second sub-picture, whereas the black pixel is mapped with a second sub-picture as a non-printed spot.

In the security element, the sub-pictures may consist of more than one graphical element, and the total area of the graphical elements in the first sub-picture is higher than the total area of the elements in the second sub-picture. The final picture constituting the security element may have the form of a negative in another background or secured picture.

The security element, according to the invention, is characterized in that every pixel of the s security element has a pseudo-randomly generated value from a predefined range of natural numbers, and every natural number from the predefined range represents another pixel color or another grayscale shade of the same color. A matrix code defines a hidden picture. Every pixel of the frequency space is modified according to the pixel values of the hidden picture so that when the hidden picture pixels are of a first color selected from a color range or a first grayscale shade of one color, then no modification of the frequency space occurs, and when the hidden picture pixels are of a second color selected from a color range or a second gray shade of the same color, then pixels of the hidden picture are brightened. Each of the intermediate tones of the grayscale has an increased frequency of the signal in the frequency space according to a predefined function. Preferably, this is a proportional function.

Preferably, the hidden picture is black and white. The hidden picture may comprise a text or a digit, or a photo. Also, it is possible that the hidden picture is a photo of a person or a portrait photo.

According to the invention, the final picture may have additional protection means in the form of fluorescent particles and/or particles reacting to the magnetic field, and/or particles absorbing the IR light, and/or thermochromic particles and/or photochromic particles.

The above security element can be done as follows: in the step of generating the initial picture, which is a random picture, the following is first determined - the size of the random picture in pixels (height m, width n). It has the form of a matrix of pixels, also termed an initial matrix, a matrix code, or a code consisting of at least two pixels or a two-dimensional code. Then, for every pixel, one pseudorandomly generates a value from a predefined range of natural numbers, where every natural number from the predefined range represents a different pixel color or a different shade of the same color. A pixel may have one of 256 values. For instance, for every pixel XnYm, one generates a pixel value, also called a pixel color value, from 0 to 255 or 1 to 256. To each such pixel value, a color is assigned - it may be any arbitrary color such as red (R), green (G), blue (B), or a combination thereof. The term colored pixels is understood as pixels of various colors and/or single-color pixels but of different shades of the same color. Also, according to the invention, a colored pixel is white and/or black. Also, colored pixels may be single-color pixels of any arbitrary grayscale. For instance, two colored pixels may also be two different single-color grayscale pixels where each of these two pixels is of a different shade of gray. When the parameters of the pixel value are RGB colors and identical, the resultant color appears gray to the human eye. The generated random picture in the form of the initial matrix, where every pixel has a given color or a given gray shade, is subjected to two-dimensional Fourier transformation, in this way generating a matrix of the spatial frequencies of the initial picture. The matrix of the spatial frequencies of the initial picture may also be called, interchangeably, a picture of the spatial frequencies or may be said to create a picture of the spatial frequencies. It is represented in the initial picture in which a color (brightness) denotes a signal level for a given frequency. The placement of a pixel on the X and Y axes denotes its frequency. According to the invention, the picture of the spatial frequencies may be presented as a matrix composed of parts that are mirror images of a single picture of the spatial frequencies. It means that the picture of the spatial frequencies is constituted by a single matrix composed, for instance, of four parts, wherein two parts define one mirror image, and the other two parts are the other mirror images. The mirror image may be defined diagonally when the parts adhere to each other with only one corner or linearly, i.e., the mirror image is constituted by parts adhering to a whole side. In this case, point 0.0 is in the center of the picture of the spatial frequencies. In the step of generating a hidden picture, a hidden picture is defined that is intended to be hidden in the final picture, for instance, in a secured background. The hidden picture has the form of a matrix, also termed the matrix of the hidden picture. The hidden picture may be generated as grayscale or colored. Preferably, the hidden picture is black and white. The hidden picture may be of any form. For instance, it may comprise a text, digit, or arbitrary photo. Also, the hidden picture may be a photo of a person or a portrait photo. The matrix of the initial picture's spatial frequencies is modified so that one brightens the spots in which the hidden picture is to be placed, i.e., the spatial signal is amplified. ==Thus, every pixel of the frequency space in the matrix of the spatial frequencies of the initial picture may be modified according to the pixel values of the hidden picture according to the matrix of the hidden picture such that when the hidden picture pixels are of a first color or a first gray shade, then one modifies no frequency space, and when the hidden picture pixels are of a second color or a second gray shade then one brightens the pixels of the hidden picture. Thus, for instance, if the pixels of the hidden picture XnYm are white, one does not modify the XnYm of the frequency space, whereas if the pixels XnYm are black, the pixels of the hidden picture are made bright. Each of the intermediate tones of the grayscale increases the signal's frequency in the frequency space according to a predefined function, thus creating a modified picture of the spatial frequencies. It means that each of the intermediate tones of the grayscale may proportionally brighten the frequency space. Then, the picture of the spatial frequencies modified by the hidden picture is subjected to the inverse Fourier transformation generating a picture with the hidden picture or a matrix with the hidden picture. In other words, it can be said that the initial picture is re-created after the Fourier transformation but modified by the hidden picture. This generated picture with the hidden picture in the form of the matrix with the hidden picture, for instance, in grayscale, is subjected to thresholding based on the comparison of characteristic features of every pixel against a predefined brightness index or a given color coverage index. After the thresholding, the obtained matrix with the hidden picture is used for generating the final picture constituted, for instance, by a secured background or a filling of geometrical shapes on the product and/or on the data carrier. After the thresholding, the matrix with the hidden picture is called, interchangeably, the picture with the hidden picture. According to the invention, after the thresholding, every pixel of the matrix with the hidden picture is substituted by a sub-picture, where all the pixels of the same colors are substituted by the same sub-pictures. Optionally, pixels of different colors or different grayscale shades may be substituted by different sub-pictures or the same sub-pictures but differently arranged or the same sub-pictures but of different areas. In this way, a matrix of sub-pictures is created. After removing the framing, the matrix of sub-pictures is converted into the final picture.

Thus, it is possible that the created final picture, for instance, of a secured background or a filling, has the form of a vector picture in which the pixel appearance is different depending on the pixel color, a first one or a second one, in the re-generated initial picture with the hidden picture pixel.

A method for securing a data carrier based on placing, onto the surface of the data carrier, a final picture in the form of a matrix, the matrix consisting of at least two colored pixels arranged such that, when reading in the frequency space, a hidden picture is presented, comprising steps of generating an initial picture, executing the Fourier transformation, generating a hidden picture, modifying spatial frequencies of the initial picture, and executing the inverse Fourier transformation, wherein:
in the step of generating an initial picture, one defines the size of the initial picture in pixels, where, for every pixel, one pseudorandomly generates a value from a predefined range of natural numbers, where every natural number from the predefined range represents another pixel color, and the generated initial picture takes the form of an initial matrix in which every pixel has a particular color,
in the step of generating a hidden picture, a hidden picture is defined in the form of a matrix of the hidden picture that is to be hidden in the final picture,
the generated initial picture is subjected to two-dimensional Fourier transformation generating a matrix of the spatial frequencies of the initial picture,
every pixel of the matrix of the spatial frequencies of the initial picture is modified according to the pixel values of the hidden picture according to the matrix of the hidden picture so that when the hidden picture pixels are of a first color, one modifies no frequency space, and when the hidden picture pixels are of a second color, one brightens the pixels of the hidden picture,
the picture of the spatial frequencies of the initial picture, modified by the hidden picture, is subj ected to the inverse Fourier transformation generating a picture with the hidden picture,
the generated picture with the hidden picture is subjected to thresholding,
the obtained matrix with the hidden picture after the thresholding is used for generating the final picture, where every pixel of the matrix with the hidden picture is substituted by a sub-picture after the thresholding, where all the pixels of the same colors are substituted by the same sub-pictures, and then the final picture is applied to the data carrier.

According to the invention, colored pixels are pixels of different colors and/or single-color pixels but of different shades of the same color and/or single-color pixels but of different gray shades and/or black and white pixels. Preferably, the matrix with the hidden picture after the thresholding is two-color, where every pixel of the second color is replaced with the first sub-picture, and every pixel of the first color is replaced with the second sub-picture.

The final picture is applied to the product or the data carrier as a secured background or a filling of the geometrical shapes using offset printing, letterset printing, flexographic printing, steel engraving, rotogravure, or screen printing. Preferably, each of the intermediate tones of the grayscale increases the frequency of the signal in the frequency space according to a proportional function. Pixels of different colors or of different gray shades may be replaced with the same sub-pictures but turned by different angles. For instance, a two-dimensional code consists of pixels of a first color and pixels of a second color, arranged so that, when reading in the frequency space, they present a hidden picture, where every pixel of the first color is substituted by one sub-picture, and every pixel of the second color is substituted by another sub-picture. So, the sub-picture may be a vector line tilted by a given angle, a vector picture, a shape, an alphanumerical symbol, or any graphical elements. The sub-pictures may be an arrangement of at least one line of a second color on a background of a first color or vice versa but of another slope angle, where the first slope angle defines the first sub-picture and the second slope angle defines the second sub-picture. Preferably, the first angle is -45 degrees relative to the lower edge of the document; the second angle is +45 degrees relative to the lower edge of the document. Preferably, the first angle is 0 degrees relative to the lower edge of the document; the second angle is +90 degrees relative to the lower edge of the document. The sub-pictures may be constituted by a graphical element such that pixels of one color are replaced with a graphical element of a higher area than the pixels of a second color. Also, the sub-picture may be formed by a non-printed spot. The sub-pictures may consist of more than one graphical element, and the total area of the graphical elements in the first sub-picture must be bigger than the total area of the elements in the second sub-picture. It is possible that only a pixel of the second color is replaced with the first sub-picture, whereas a pixel of the first color is not replaced with the second sub-picture as a non-printed spot, or a pixel of the first color is replaced with the second sub-picture, whereas a pixel of the second color is not replaced with the first sub-picture as a non-printed spot.

Preferably, the first color is white, the second color is black, and the initial matrix consists of black pixels and white pixels, arranged so that, when reading in the frequency space, they present a hidden picture, where every black pixel is replaced with the first sub-picture, and every white pixel is replaced with the second sub-picture. The sub-pictures may be an arrangement of at least one black line on a white background but of another slope angle, where the first slope angle defines the first sub-picture and the second slope angle defines the second sub-picture. Preferably, the first angle is -45 degrees relative to the lower edge of the document, and the second angle is +45 degrees relative to the lower edge of the document. Preferably, the first angle is 0 degrees relative to the lower edge of the document, and the second angle is +90 degrees relative to the lower edge of the document. The sub-pictures may be constituted by a graphical element such that pixels of one color are replaced with a graphical element of a higher area than pixels of a second color. The sub-pictures may consist of more than one graphical element, and the total area of the graphical elements in the first sub-picture must be bigger than the total area of the elements in the second sub-picture. It is possible that a black pixel is replaced with the first sub-picture, whereas a white pixel is replaced with the second sub-picture, as a non-printed spot, and reversely, a white pixel is replaced with the second sub-picture, whereas a black pixel is replaced with the first sub-picture, as a non-printed spot.

Preferably, the created final picture may be used as a negative in another background, filling, or secured picture. The two-dimensional initial matrix code may serve for modifying an existing background, preferably a guilloche one or composed of micro pictures, by thickening and narrowing lines or contours or by shifting them along the X or Y axis relative to the initial position. From the final picture generated from the matrix of sub-pictures, one can clip a target background shape and place it within the appropriate graphical pattern applied to the product or the data carrier. Also, it is possible that a different or the same hidden picture is placed in every pattern in the arrangement of patterns that define the securing element applied to the data carrier. Also, it is possible that every piece in the printing sheet has another hidden picture. It may define its position, production date, etc. The ink used for printing may have additional protection means, inter alia, fluorescent particles, particles reacting to the magnetic field, absorption in the IR light, thermochromic particles, and photochromic particles. The final picture in the form of a secured background or a filling of shapes may be printed on the product or on a data carrier with the iris transition effect of colors that are mixing with each other locally. It may be separated into more than one printing form and simultaneously printed with more than one printing ink. The final picture may be partially covered by other pictures printed with other printing techniques, for example, steel engraving. The final picture may be printed in at least one color.

The next step of the method of the invention is the verification of the hidden picture comprised in the final picture using the Fourier camera in a mobile apparatus or by an appropriate program for verifying the protection means.

Also, this invention relates to a method for automatic thresholding a picture with a hidden picture, created by modifying, with the hidden picture, a picture of the spatial frequencies and subjected to the inverse Fourier transform, in which:
a) for every pixel in the picture with the hidden picture, one compares its color value against a predefined threshold value so that if the value of the pixel color is bigger than the threshold value, the pixel color is changed to a selected first color, and if the value of the pixel color is smaller than the threshold value, the pixel color is changed to a selected second color,
b) one calculates a coverage parameter by summing all the pixels having the selected first color obtaining the number of pixels of the selected first color, and summing all the pixels having the selected second color obtaining the number of pixels of the selected second color, and then one divides the number of pixels of the selected second color by the number of pixels of the selected first color and multiplies times a particular coefficient,
c) one verifies if the coverage parameter has a value consistent with the setpoint.

Preferably, one verifies if the calculated coverage parameter is bigger or smaller than the setpoint, and if the calculated coverage parameter is bigger than the setpoint, then one increases the threshold value, and if the calculated coverage parameter is smaller than the setpoint, then one decreases the threshold value, and then one executes the thresholding and calculation of the coverage parameter again for the given threshold value. Optionally, one verifies if the calculated coverage parameter is bigger than the setpoint, and if the calculated coverage parameter is bigger than the setpoint, then the threshold value is decreased, and if the calculated coverage parameter is not bigger than the setpoint, then the threshold value is increased.

All these thresholding steps are repeated until the obtained coverage parameter is closest to the setpoint.

The threshold value is changed according to a function in which all the pixels in the picture with the hidden picture, which have the value of the pixel color higher than the threshold value, are changed into a selected first color, and all the pixels in the picture with the hidden picture, which have the value of the pixel color smaller than the threshold value are changed into a selected second color.

According to the invention, a value of the pixel color in the picture with the hidden picture, which is bigger than the threshold value, denotes a color for the given pixel which is brighter than the threshold value, whereas a value of the pixel color smaller than the threshold value denotes a color for the given pixel which is darker than the threshold value. Preferably, the threshold value is changed according to a function in which all the pixels in the picture with the hidden picture, which have a value of the pixel color brighter than the threshold value, are changed into a selected first color, and all the pixels in the picture with the hidden picture, which have a pixel color darker than the threshold value are changed into a selected second color. Preferably, the selected first color is brighter than the selected second color. Also, the selected first color may be white, and the selected second color may be black.

In the sense of the present invention, the coverage parameter denotes an index of coverage, with a given color, of the matrix created after the thresholding, with the hidden picture after thresholding. It means that in the matrix with the hidden picture, every pixel XnYm is checked one by one as well as its numerical value (from 0 to 255 or from 1 to 256). Then, depending on its value, one uses a function and replaces it with a selected first color or a selected second color. For instance, thus, a numerical value is replaced with colors of black or white. Assuming the threshold value to be, for instance, 120, every pixel, the R/G/B value of which (these are the same) is smaller than 120, will become white, and if it is higher, it will become black.

In the case of hiding the hidden picture in the matrix of the spatial frequencies of the initial picture modified by the hidden picture, after performing the inverse Fourier transformation, the thresholding process is beneficial, which takes into account the coverage parameter of the final picture. Having the final picture that is to be placed on the data carrier, one defines the threshold value, and the thresholding process is started for the matrix with the hidden picture. Then, the coverage area is checked - i.e., checking if, based on the executed thresholding, one can already obtain the final picture. In case the amount of the one selected color in the final picture is bigger than planned, the whole thresholding process is repeated once more.

When calculating the coverage parameter, one takes into consideration a coefficient - for instance, the number of 100. However, one may use any arbitrary number.

The calculated coverage parameter is compared with the setpoint. The setpoint corresponds to the picture that is to be created after thresholding.

This invention also relates to a data carrier containing a security element produced with the method according to the present invention.

In the present invention, one increased the safety level of the final picture in the form of backgrounds or shape fillings by combining them with the technology of digital watermarks. Such a solution, besides the anti-photocopying features, will have a hidden picture generated in such a manner that it is an additional barrier against reproducing.

### Description of figures

A method for securing products, particularly the data carriers, and a security element, a method for automatic thresholding, as well as features and advantages of particular embodiments of the invention, will become clearer based on the following specification when read along with the associated drawing, in which:
- Fig. 1: shows an exemplary data carrier in the form of a banknote secured according to the present invention, where a hidden picture has been placed in the final picture obtained with a method according to the invention;
- Fig. 1a: illustrates the generated initial picture of a random color scheme in the form of white noise;
- Fig. 1b: illustrates the generated initial picture of a random color scheme in the form of the Perlin noise;
- Fig. 1c: illustrates a picture of the spatial frequencies for an initial picture;
- Fig. 1d: shows s picture of the spatial frequencies composed of four matrixes;
- Fig. 2a: illustrates a generated picture in the form of the matrix with the hidden picture after thresholding, before the process of replacing with sub-pictures;
- Fig. 2b: shows an example of a matrix of sub-pictures created by replacing pixels in Fig. 2a with lines of angles +45 degrees and -45 degrees, according to an embodiment of the invention;
- Fig. 2c: shows an example of a matrix of sub-pictures created by replacing pixels in Fig. 2a with lines of angles 0 degrees and -90 degrees, according to an embodiment of the invention;
- Fig. 2d: shows an example of a final picture that has been created by replacing pixels with lines of angles +45 degrees and -45 degrees, without the framing of the sub-picture matrix, according to an embodiment of the invention;
- Fig. 2e: shows an example of a final picture that has been created by replacing pixels with lines of angles +0 degrees and 90 degrees, without the framing of the sub-picture matrix, according to an embodiment of the invention;
- Fig. 3a: shows an example of a matrix of sub-pictures created by replacing black pixels of Fig. 2a, with black circles, according to an embodiment of the invention;
- Fig. 3b: shows an example of a final picture that has been created by replacing black pixels with black circles, without the framing of the sub-picture matrix, according to an embodiment of the invention;
- Fig. 4a: shows an example of a matrix of sub-pictures created by replacing black pixels of Fig. 2a, with black triangles, according to an embodiment of the invention;
- Fig. 4b: shows an example of a final picture that has been created by replacing black pixels with black triangles, without the framing of the sub-picture matrix, according to an embodiment of the invention;
- Fig. 5a: shows an example of a matrix of sub-pictures created by replacing black pixels and white pixels of Fig. 2a with black graphical sub-pictures of various shapes and surface areas, according to an embodiment of the invention;
- Fig. 5b: shows an example of a final picture that has been created by replacing black and white pixels with black graphical sub-pictures of various shapes and surface areas, without the framing of the sub-picture matrix, according to an embodiment of the invention;
- Fig. 6a: shows an example of a matrix of sub-pictures created by replacing black pixels and white pixels of Fig. 1a with black graphical sub-pictures, where the sub-pictures are composed of more than one element, and the total area of the elements in the first sub-picture is higher than the total area of the elements of the second sub-pictures, according to an embodiment of the invention;
- Fig. 6b: shows an example of a final picture that has been created by replacing black and white pixels with black graphical sub-pictures, in the manner as in Fig. 5a, without the framing of the sub-picture matrix, according to an embodiment of the invention;
- Fig. 7a: shows an example of a final picture composed of lines of angles +45 degrees and -45 degrees, according to an embodiment of the invention;
- Fig. 7b: shows an example of a final picture composed of lines of angles +45 degrees and -45 degrees as a negative, according to an embodiment of the invention;
- Fig. 8a: shows an embodiment of a final picture composed of circles, according to an embodiment of the invention;
- Fig. 8b: shows an embodiment of a final picture composed of circles as a negative, according to an embodiment of the invention;
- Fig. 9: shows an embodiment of a final picture in the form of a denomination, according to an embodiment of the invention;
- Fig. 10: shows an exemplary modification of an existing background by thickening and narrowing lines and/or contours, according to an embodiment of the invention;
- Fig. 11: schematically shows a method for creating a picture with a hidden picture by combining a modified picture of the spatial frequencies with a hidden picture;
- Fig. 12a and 12b: show an exemplary fragment of a securing element placed on a data carrier and the same fragment of a securing element with shown hidden picture visible during the verification;
- Fig. 13: shows a flow diagram of a method for generating a final picture with a hidden picture according to an embodiment of the invention;
- Fig. 14a and 14b: show flow diagrams of automatic thresholding according to embodiments of the invention;
- Fig. 15a and 15b: show an exemplary fragment of a final picture according to an embodiment of the invention, wherein, on the target substrate, selected lines have been printed using a first color and other lines using a second color.

### Description of exemplary embodiments of the invention

According to the present invention, a data carrier has the form of, for instance, a banknote, an ID card, a passport insert, a passport or other booklet page, a chip card, a smart card, personal documents, a driving license, etc. In the sense of the present invention, data carriers are any data carriers for storing information safely, including any securities or secured documents.

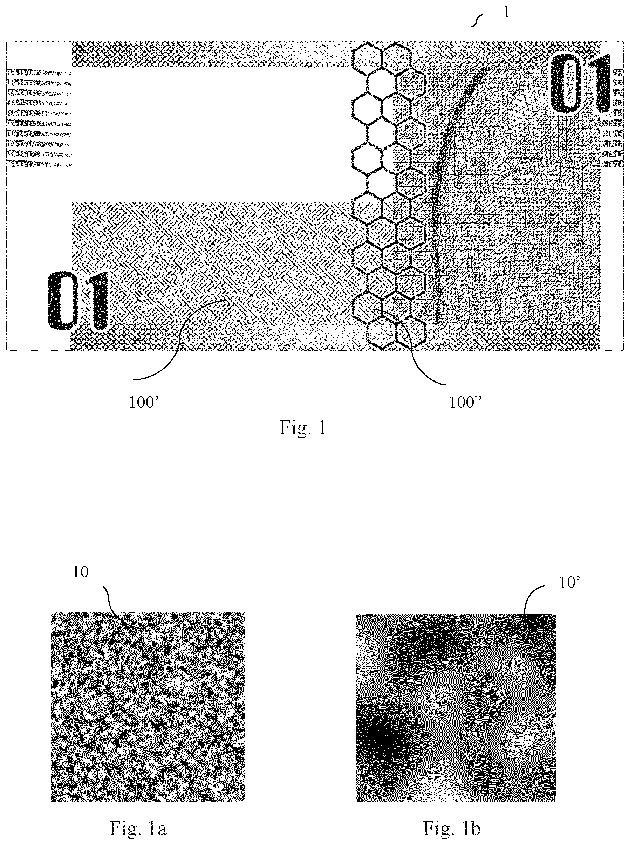

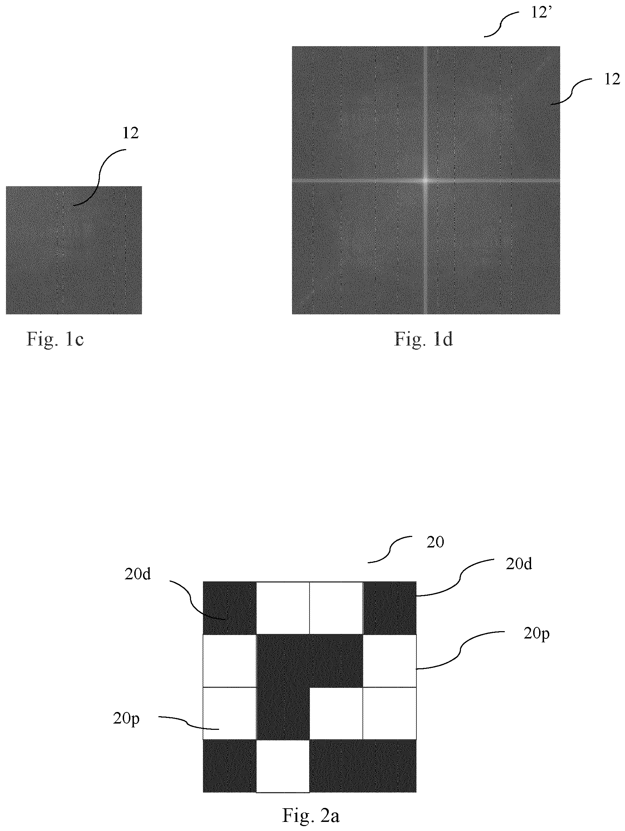

Fig. 1 shows a data carrier 1 in the form of a banknote secured according to the invention. The data carrier 1 comprises a security element 100, 100', 100", composed of a final picture 90, in the frequencies of which a hidden picture 80, 80' is comprised. The security element 100' may be in the form of a secured background containing at least one hidden picture. Also, the security element 100" may have the form of a filling, for instance, of geometrical shapes, a character contour in the form of a text, alphanumerical characters, and/or special characters placed on the data carrier 1, and wherein in at least one filling a hidden picture is comprised. Thus, the security element 100, 100', 100" may have a continuous form (background), or it may be point-wise arranged in any arbitrary manner on the data carrier 1 (a filling of letters, digits, or shapes). Preferably, according to the invention, the final picture is a background or an anti-photocopying imprint containing at least one hidden picture, for instance, a steganographic picture. The final picture, being in the form of a filling, may comprise the same or a different hidden picture in every part of this filling. The hidden picture has not been shown in Fig. 1. It becomes visible during the verification of the security element 100, 100', 100". The references 100, 100', 100" refer to all embodiments of the security element described in the present invention.

The verification relies on performing the Fourier transformation once more for the final picture printed or placed on the data carrier 1. Then, the transformation shows the hidden picture. The verification of the security element 100, 100', 100" involves scanning the final picture or taking its photo and performing the Fourier transformation for it. In the picture of the frequency space, a hidden picture will be visible. For this purpose, one may use a software program employing the transformation. Optionally, one may use "a Fourier camera," i.e., a mobile device application that transforms the observed final picture into a picture of the spatial frequencies in real time.

Additionally, the data carrier 1 may have other protection means, for instance, multicolored irises, i.e., coloristic smooth transitions along the whole banknote or the data carrier, recto-verso, negative and positive micro printing, elements with an angled effect, micro text, optically variable rosettes, or the use of special inks. These elements increase the safety against counterfeiting the data carrier 1; however, they are not a part of the present invention, therefore, have not been shown in the drawing.

Fig. 1a and 1b show exemplary forms of a generated initial picture of a random color scheme. Fig. 1a illustrates a random picture 10 in the form of white noise, and Fig. 1b illustrates a random picture 10' in the form of the Perlin noise. According to the invention, one may use other types of noise.

Fig. 1c shows an initial picture subjected to the Fourier transformation, also called a picture or a matrix 12 of the spatial frequencies or a picture or a matrix 12 of the spatial frequencies of the initial picture. According to the invention, the picture of the spatial frequencies may create a lot of single individual matrixes 12 of the spatial frequencies. For instance, a picture 12' of the spatial frequencies may be composed of four parts that are the mirror images of a single matrix 12 of the spatial frequencies. It means that the picture 12' of the spatial frequencies may constitute a single matrix composed of z four parts, wherein two parts define one mirror image, and the other two parts are the other mirror image. The point 0.0 has been shown as a white dot in the center of the picture 12' of the spatial frequencies. Also, the picture 12' of the spatial frequencies may be a multiplicity of repeated individual matrixes 12 of the spatial frequencies, which are repeated as an even arrangement of two or four individual matrixes. An arrangement of four individual matrixes 12 of the spatial frequencies has been shown in Fig. 1d.

Fig. 2a shows an example of a generated picture in the form of a matrix with a hidden picture after thresholding 20. In this way, a pixel value maps two colors: black 20d or white 20p, in the shown embodiment.

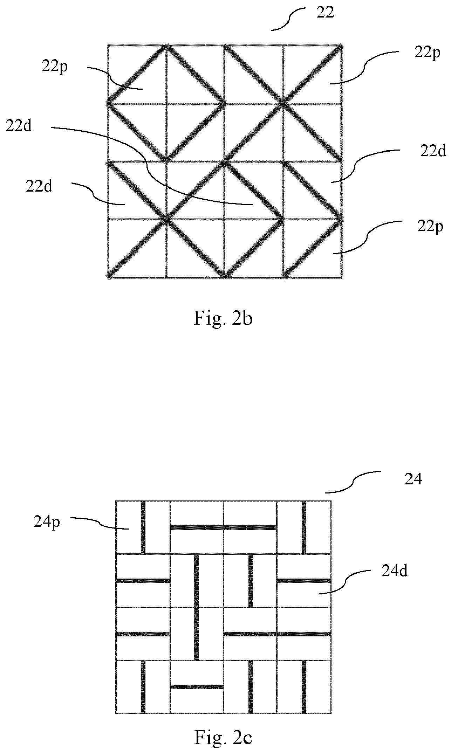

Fig. 2b shows a first embodiment of the securing element in which black and white pixels of Fig. 2a in the matrix of sub-pictures 22 are replaced with two sub-pictures. The black pixels 20d are replaced with a first sub-picture 22p in the form of the black line on a white background, sloped relative to the edge of the securing element at an angle of +45 degrees. The line is drawn so that it creates the pixel diagonal running from the left lower corner to the right upper corner. The white pixels 20p are replaced with a second sub-picture 22d in the form of the black line on a white background sloped relative to the edge of the securing element at an angle of -45 degrees. The line is drawn so that it creates the pixel diagonal running from the lower right corner to the upper left corner.

Fig. 2c shows an optional second embodiment of the security element. In the matrix of sub-pictures 24, the black and white pixels of the initial matrix 20m shown in Fig. 2a are also replaced with two sub-pictures. However, here the black pixels 20d are replaced with the black line on a white background sloped relative to the lower edge of the securing element at an angle of +90 degrees. This is the first sub-picture 24p. The line is drawn so that it runs through the pixel center. On the contrary, the white pixels 20p are replaced with the black line on a white background sloped relative to the lower edge of the securing element at an angle of 0 degrees. This is the second sub-picture 24d. Here, the line is drawn so that it runs through the pixel center as well. In the matrix shown in Fig. 2c, the line constituting the first sub-picture 24p is vertical, and the line constituting the second sub-picture 24d is horizontal.

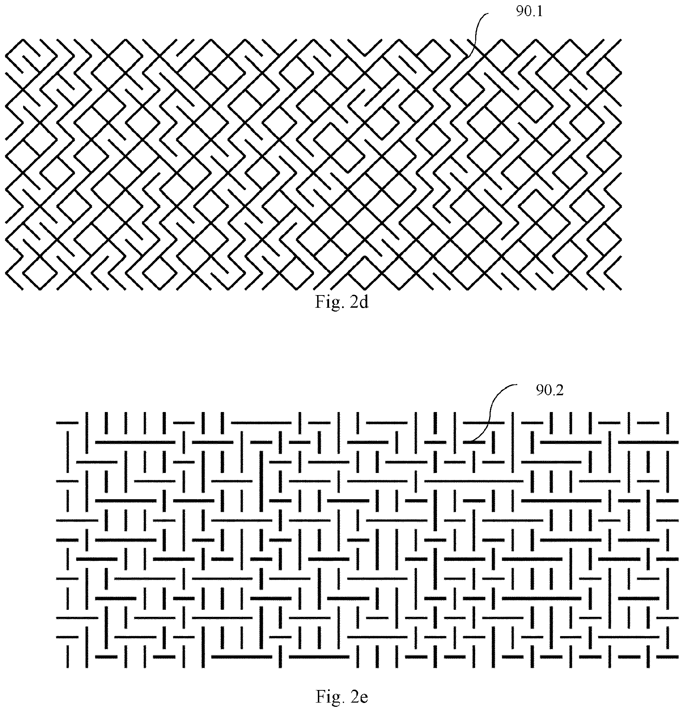

Fig. 2d shows an example of a first embodiment of the securing element, in the form of the final picture 90.1 created from the matrix of sub-pictures 22 of Fig. 2b, in which pixels are replaced with lines of angles +45 degrees and -45 degrees. The example shows the final picture 90.1 without the framing of the sub-picture matrix 22. Fig. 2e shows an example of a second embodiment of the security element of Fig. 2c, as the final form of the final picture 90.2 in which pixels are replaced with lines of angles +0 degrees and 90 degrees, without the framing of the sub-picture matrix 24.

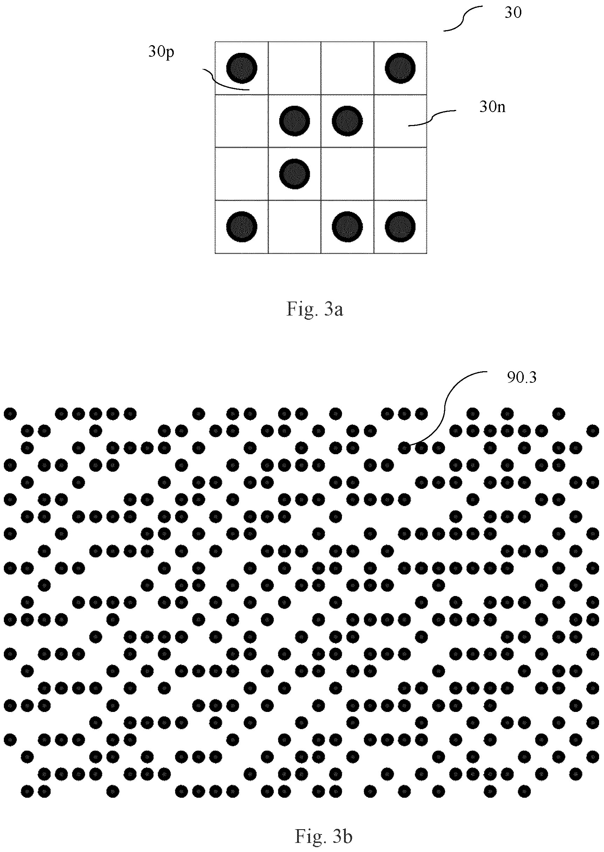

Fig. 3 a shows an example of a third embodiment in which black pixels 20d of Fig. 2a are mapped by black circles on a white background. The circles are of the same size and are arranged in the same manner relative to the centers of the black pixels 20d. The diameters of the circles are smaller than the pixel sides, and the center of every circle coincides with the center of the pixel. According to this embodiment, only pixels of one type are replaced with the sub-picture, whereas the second type is not. In this example, a black pixel 20d is replaced with the first sub-picture 30p in the form of the black circle on a white background, whereas a white pixel 20p is not replaced with a second sub-picture but is a non-printed spot 30n. Fig. 3b shows an example of a third embodiment of the security element of Fig. 3a as the final form of the final picture 90.3, in which black pixels 20d are replaced with black circles without the framing of the sub-picture matrix 30.

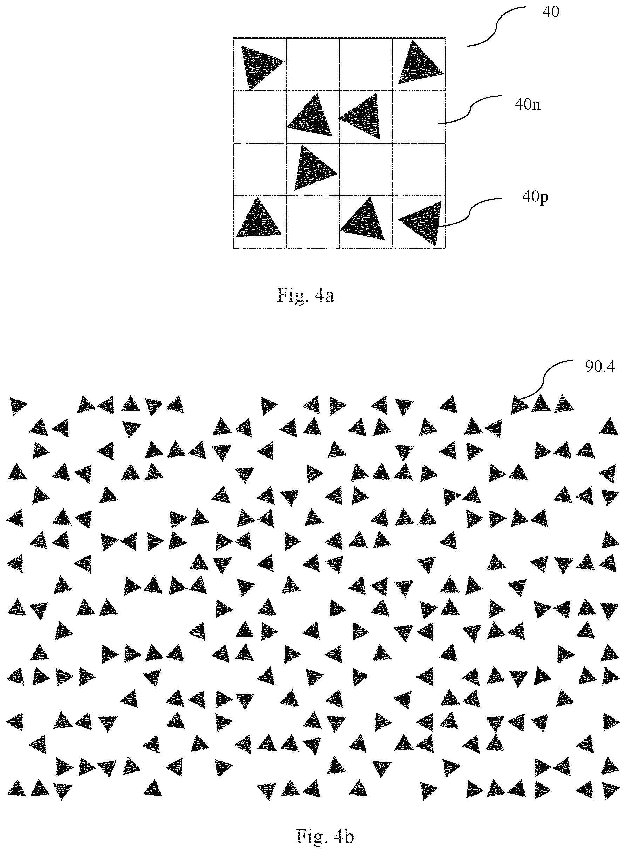

Fig. 4a shows an example of a fourth embodiment in which black pixels 20d of Fig. 2a are mapped with black triangles on a white background. The black triangles are of the same size. The triangles may be of any arbitrary type, for instance, right triangles, isosceles triangles, etc. In Fig. 4a, all the triangles are even-sided triangles, and the position within a pixel is arbitrary. It means that in a single black pixel 20d, the triangle may contact the pixel lower edge, and in another black pixel 20d of the same matrix, the triangle may contact the pixel left edge, and in yet another black pixel 20d, the pixel and the triangle centers are located in the same place. According to the fourth embodiment, in the matrix of sub-pictures 40, only pixels of one type are replaced with a sub-picture, whereas the second type is not. In this example, a black pixel 20d is replaced with a first sub-picture 40p in the form of a black triangle on a white background, whereas a white pixel 20p is not replaced with a second sub-picture but is a non-printed spot 40n. Fig. 4b illustrates an example of the fourth embodiment of the security element of Fig. 4a as the final form of the final picture 90.4, in which black pixels 20d are replaced with black triangles without the framing of the sub-picture matrix 40.

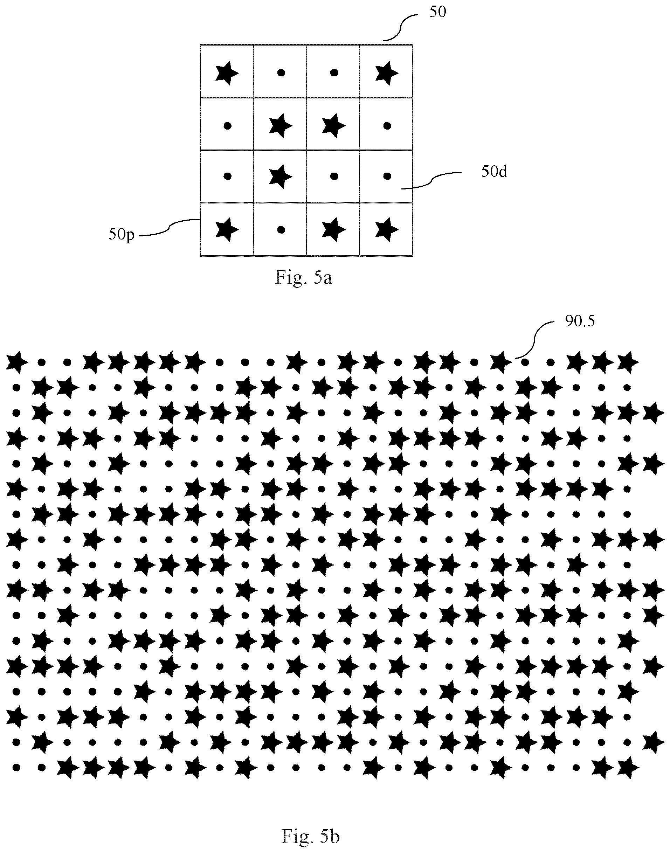

Fig. 5a shows an example of a fifth embodiment in which black pixels 20d and white pixels 20p of Fig. 2a are mapped with black graphical sub-pictures of various shapes and surface areas. Black pixels 20d are mapped with five-pointed black stars on a white background. This is the first sub-picture 50p. White pixels 20p are mapped with black circles on a white background. This is the second sub-picture 50d. In the shown embodiment, the stars are arranged in the same manner and are located in the centers of the black pixels 20d. On the other hand, the circles are located in the centers of the white pixels 20p but are of much smaller surface areas than the stars. Fig. 5b illustrates an example of the fifth embodiment of the security element of Fig. 5a as the final form of the final picture 90.5 in which black pixels 20d and white pixels 20p are replaced with black graphical sub-pictures of various shapes and surface areas, without the framing of the sub-picture matrix, 50.

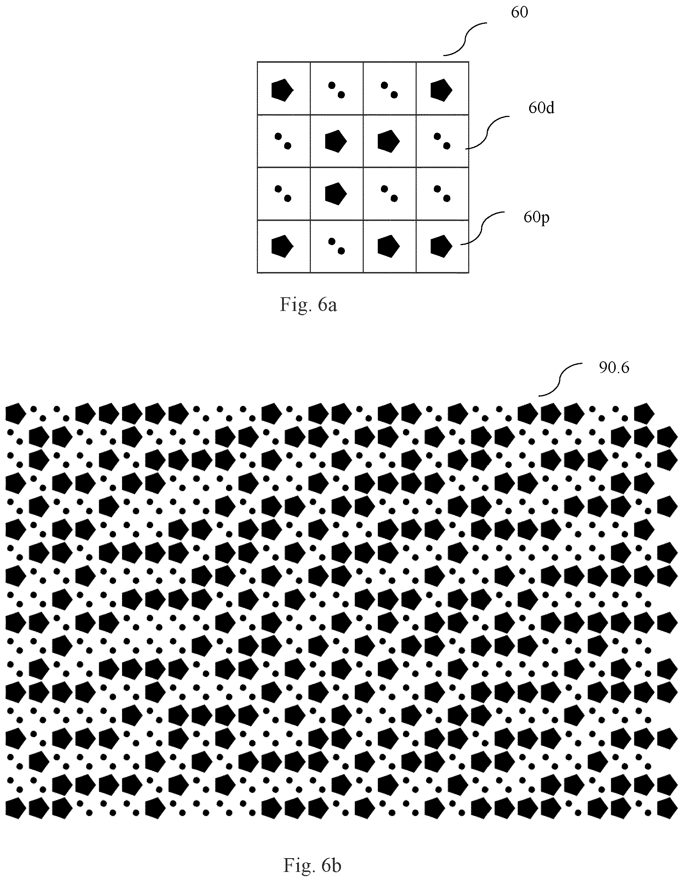

Fig. 6a shows an example of a sixth embodiment in which black pixels 20d and white pixels 20p of Fig. 2a are replaced with black graphical sub-pictures, wherein the sub-pictures placed instead of black pixels 20d are composed of one graphical element in the form of a regular black pentagon on a white background. This is the first sub-picture 60p. In turn, the sub-pictures placed in the matrix of sub-pictures 60 instead of white pixels 20p are composed of more than one graphical element, here of two black circles on a white background. This is the second sub-picture 60d. The total area of the graphical element in the first sub-picture 60p is higher than the total area of the graphical elements constituting the second sub-picture 60d. The arrangement and locations of the regular black pentagons relative to the centers of the black pixels 20d are the same. Also, the arrangement and locations of two black circles relative to the centers of the white pixels 20p are the same. Also, according to the invention, the graphical element constituting a sub-picture in every pixel of a given color may be arranged differently, and also it may have another area. Fig. 6b illustrates an example of the sixth embodiment of the security element of Fig. 6a as the final form of the final picture 90.6, in which black pixels and white pixels 20p are replaced 20d with different black graphical sub-pictures of different numbers of graphical elements and diverse areas, without the framing of the sub-picture matrix 60.

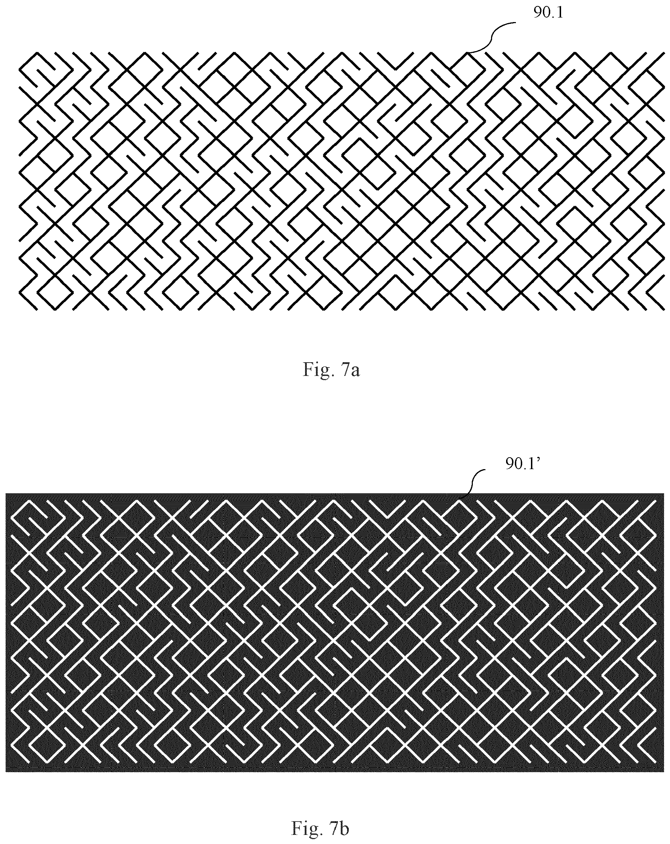

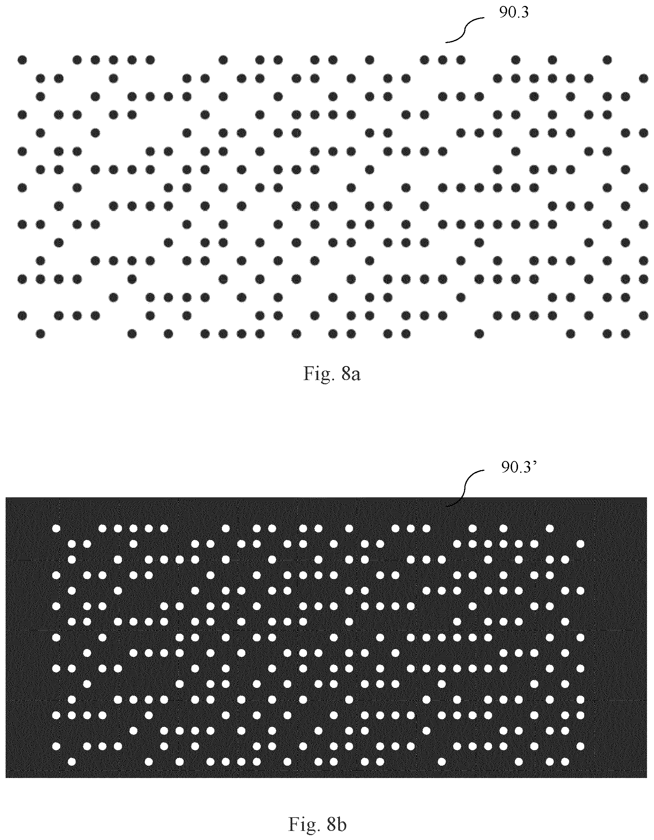

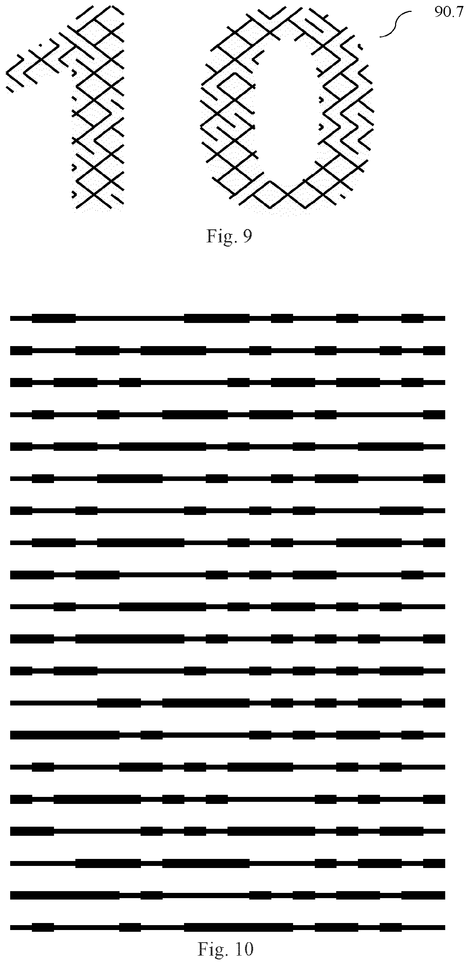

Fig. 7a shows, again, an example of the first embodiment of the invention in which the final picture 90.1, to be placed on the data carrier 1, consists of lines of angles +45 degrees and -45 degrees. The final picture 90.1' of this embodiment is shown in Fig. 7b. Thus, Fig. 7b shows an example of the final picture 90.1' consisting of lines of angles +45 degrees and -45 degrees as a negative. Similarly, Fig. 8a shows an example of the third embodiment of the invention that is composed of circles, for which Fig. 8b illustrates an embodiment of the final picture 90.3' composed of circles as a negative. In turn, Fig. 9 shows an embodiment of the final picture 90.7 shown in Fig. 7a in the form of a denomination of the numerical value ten.

Fig. 10 illustrates an example of a modification of an existing background consisting of sub-pictures in the form of a black line on a white background. The line has the same arrangement and location relative to the sides of every mapped pixel. However, the lines and/or line contours are thickened or narrowed. Due to this modification of the exemplary single sub-picture in the form of the black line, one obtains mapping of pixels of two different colors.

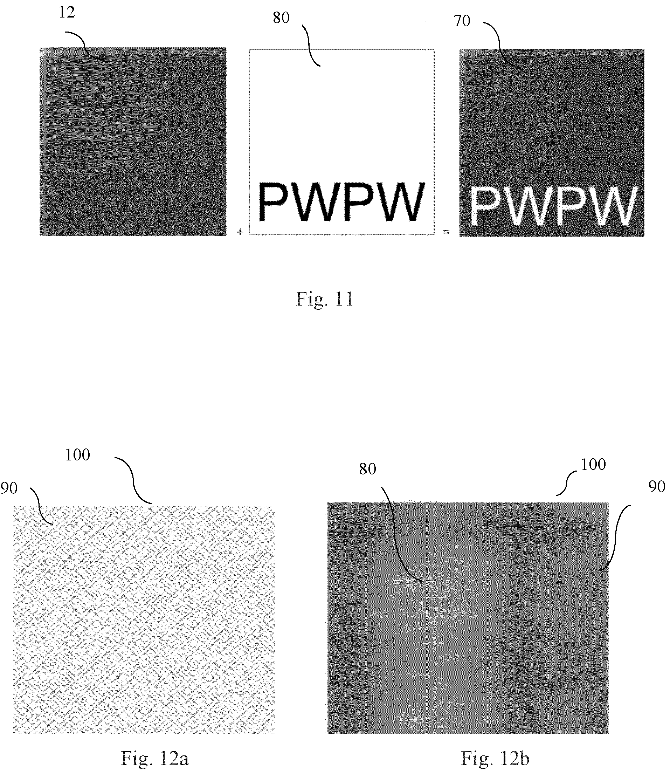

Fig. 11 shows the process of creating a picture 70 with a hidden picture that is created by modifying the spatial frequencies of the initial picture 12. The hidden picture 80 is written in the frequencies of the initial picture 12. Then, by amplifying the amplitude in the location of the hidden picture 80, the picture of the spatial frequencies of the initial picture, modified by the hidden picture, is subjected to the inverse Fourier transformation generating, again, the initial picture after the Fourier transformation, however, modified by the hidden picture, also called a picture 70 with the hidden picture (not shown in the drawing).

Fig. 12a shows a security element 100 in the form of a vector pattern that is visible with the naked eye on the surface of data carrier 1. If it is verified using a Fourier camera in a mobile apparatus or by an appropriate software program for verifying the protection means, a user will see a hidden picture 80 included in the final picture 90 of the securing element 100. The hidden pictures 80 included in the final picture 90 are shown in Fig. 12b.

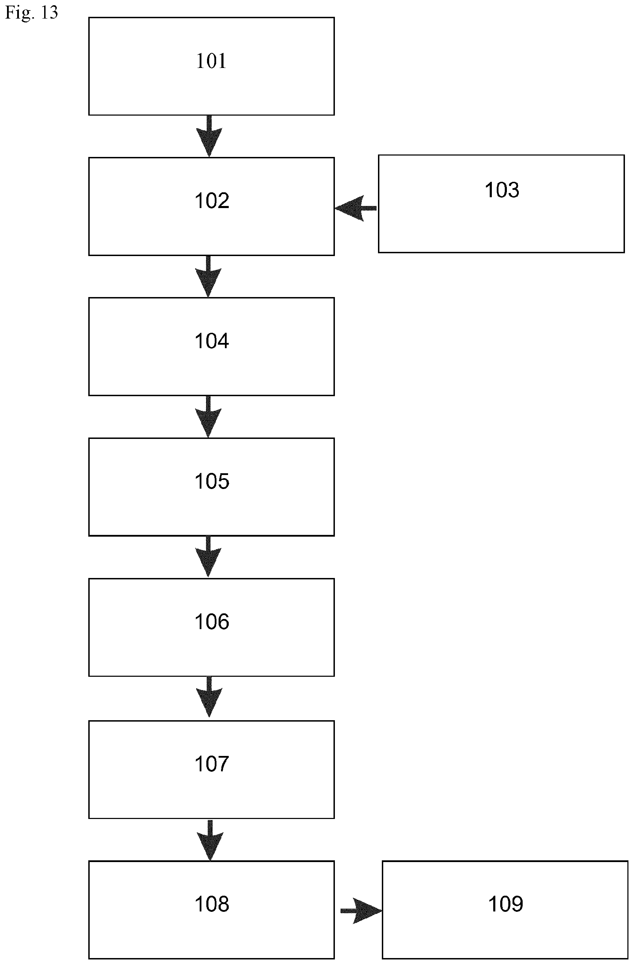

Fig. 13 shows the steps of a method for securing the products, in particular data carriers 1, in the form of a block diagram. In the step 101, an initial picture 10 is generated in the form of a random picture. Here, the user defines the size of the required random picture 10 in pixels (for example, the height of 4 pixels and the width of 4 pixels). Then, for every pixel, one pseudorandomly generates a value from 0 to 255 or from 1 to 256 and assigns a color parameter to it (for example, red, green, or blue). Of course, in one embodiment, one may use specialized algorithms generating a noise, for example, the Perlin noise, gray noise, white noise, or other types of noise, by means of dedicated numerical environments. Then, in the step 102, one generates the hidden picture 80. The user, using any arbitrary graphical environment, creates a picture that is to be hidden in the final picture 90 of the security element 100. It may have any graphical or alphanumerical form, or it may constitute a picture combining graphical and alphanumerical forms. It may be generated in grayscale. However, especially good results are obtained when using a color space, especially black and white. Optionally in the step 102, the hidden picture 80 may be generated automatically instead of the user. Then, in the step 103, the initial picture 10 generated in the step 101 is subjected to the Fourier transformation. The generated random picture 10 in the form of an initial matrix of pixels, where every pixel has a given color, is subjected to two-dimensional Fourier transformation. In this way, a matrix 12 of the spatial frequencies of the initial picture is generated. Then, in the step 104, one modifies the spatial frequencies of the random picture 10. Every pixel of the frequency space in the matrix 12 of the spatial frequencies of the initial picture is modified according to the pixel values of the hidden picture 80. The hidden picture 80 has the form of a matrix of pixels, also termed the matrix of the hidden picture. The pixels of the hidden picture 80, if white, do not modify the frequency space. If black, then the pixels of the hidden picture 80 are brightened (they become bright). Each of the intermediate tones of the grayscale brightens the frequency space proportionally. The brightening itself may also be called a process of increasing the frequencies of the signal in the frequency space. In the step 105, the inverse Fourier transform is executed. The picture of the spatial frequencies modified by the hidden picture is subjected to the inverse Fourier transformation. In this way, one generates, again, the initial picture subjected to the Fourier transformation (i.e., the picture 12) but modified by the hidden picture 80. The picture created in this way is also called a picture 70 with a hidden picture. Usually, it is a grayscale picture containing pixels of the pseudorandomly selected color, for instance, in the form of the matrix with the hidden grayscale picture. Then, in the step 106, the thresholding process is executed for the picture generated in the step 105. However, contrary to the known manual/static thresholding with only one threshold value irrespective of the input picture, this invention realizes automatic thresholding. In the known thresholding, depending on the size of the hidden picture, and its location (frequencies), the picture obtained by the IFFT algorithm may be either very bright or dark. After the static thresholding process, it may turn out that 80% or 90% of pixels will be black or white. The protection means itself would be effective; however, just after the replacement process, 90% of lines would be turned in one direction. It could be less attractive visually. The automatic thresholding of the invention makes it possible that, for example, 50% of lines in the final picture are turned in one direction and the other 50% in another direction. The innovative thresholding process employed in the present invention is more thoroughly explained in reference to Fig. 14 below. Back in Fig. 13, in the step 107, one may perform a clipping operation wherein the obtained matrix 20, with the hidden picture after the thresholding, is reduced by clipping a required portion. An example of such clipping is shown in Fig. 9. Then, in the step 108, a replacing operation is executed wherein the final picture 90 is generated. To this end, one reads every pixel of the matrix 20m and replaces it with a predefined sub-picture 22p, 24p, 30p, 40p, 50p, 60p, 22d, 24d, 50d, or 60d, creating a matrix of sub-pictures 22, 24, 30, 40, 50, 60. The sub-picture may be a vector line tilted by a given angle, a vector picture, a graphical shape, an alphanumerical symbol, or another graphical element. Then, in the step 109, the final picture 90, 90.1, 90.1', 90.2, 90.3, 90.3', 90.4, 90.5, 90.6, 90.7, 90.8, 90.8' is placed within the target graphical project and printed. The obtained final picture 90, 90.1, 90.1', 90.2, 90.3, 90.3', 90.4, 90.5, 90.6, 90.7, 90.8, 90.8' is placed in a graphical pattern of the data carrier 1 and then printed with a printing technique. The obtained final picture 90, 90.1, 90.1', 90.2, 90.3, 90.3', 90.4, 90.5, 90.6, 90.7, 90.8, 90.8' may be verified in an optional step of the method, which is not shown in the figures. The verification consists in scanning the picture and performing the Fourier transform for it. The hidden picture 80 will be visible in the picture of the frequency space. Also, the securing element 100, 100', 100" may be live viewed on a mobile device.

Fig. 14a shows a flow diagram of the automatic thresholding process according to one embodiment of the invention. In the thresholding step 200, for every pixel (x, y) in the picture of a given height and width, one compares its color value which is defined in the range from 1 to 256, against a predefined threshold value. If the value of the pixel color is smaller than the threshold value, the pixel color is changed to black (the value of 1 is adopted). If the value of the pixel color is bigger than the threshold value, the pixel color is changed to white (the value of 256 is adopted). In the following step 201, the pixel coverage area is calculated. One makes a sum of all white pixels obtaining the number of white pixels. Similarly, black pixels are summed. Then, the number of black pixels is divided by the number of white pixels and multiplied by a particular coefficient, for instance, 100. In this way, the coverage parameter is obtained. In the next step, 202, one verifies if the coverage parameter has a value that is consistent with a setpoint defined by the user. If yes, the following process is started. If not, then in the step 203, one checks if the calculated value of the coverage area is bigger than the setpoint. If yes, then, in the step 204, the threshold value is decreased. If not, then, in the step 205, the threshold value is increased. Fig. 14b shows a flow diagram of the automatic thresholding according to another embodiment of the invention. In this variant of the thresholding process, in the step 300, for every pixel (x, y) in a picture of a given height and width, one compares its color value against a predefined threshold value. If the value of the pixel color is smaller than the threshold value, the pixel color is changed to black (the value of 1 is adopted). If the value of the pixel color is bigger than the threshold value, the pixel color is changed to white (the value of 256 is adopted). In the following step 301, the pixel coverage area is calculated. One makes a sum of all white pixels obtaining the number of white pixels. Similarly, black pixels are summed. Then, the number of black pixels is divided by the number of white pixels and multiplied by a particular coefficient, for instance, 100. In this way, the coverage parameter is obtained. Then, in the step 302, the threshold values are modified sequentially; one compares the obtained coverage area with the setpoint defined by the user. If the obtained value of the coverage area is bigger than that set by the user, one increases the threshold value and executes the steps of thresholding and calculating the coverage area again. If, on the contrary, the value of the coverage area is smaller than that set by the user, one decreases the threshold value and executes the steps of thresholding and calculating the coverage area again. Here, the threshold value is changed, both when increasing as well as decreasing, according to a predefined function that defines the required coverage area. The whole process of automatic thresholding is repeated until one obtains the calculated coverage area that is nearest to the value set by the user. It means that for every pixel, one uses a function that operates so that if a given pixel is brighter than the used threshold value, the color is changed to a predefined color, for example, white. In the opposite case, the color is changed to a second predefined color, for example, black. Thus, depending on the size and shape of the hidden picture 80, the obtained grayscale will be different: brighter or darker. To summarize the thresholding step, it may be stated that there is no single, unique thresholding value that will always give the best result. Also, there is no single most preferable function realizing such thresholding. According to the invention, it is preferable to use an index of the final coverage area.

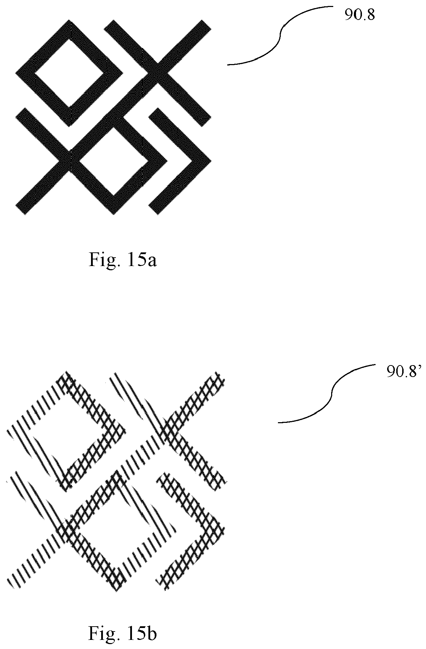

Fig. 15a shows an exemplary fragment of the final picture 90.1 shown in Fig. 2b. All the lines in the final picture 90.8 may be printed in one color. The final picture 90.8, to be placed on the data carrier 1, may have thicker and/or narrower lines than shown in Fig. 2b. Optionally, as shown in Fig. 15b, selected lines may be printed using a first color, and other using a second color. The color of lines in the final picture 90.8' not necessarily has to depend on the pixel color value. Thus, the same sub-picture in the final picture 90.8', depending on the location of the replaced pixel in the picture 20, with the hidden picture after thresholding, may have a first color in one location and another color in another location of the matrix. The choice of the line color follows the color requirements of the security element 100 placed on the substrate of the data carrier 1.

According to general legal constraints for patent specifications, the figures of the drawing illustrating the embodiments of the securing element according to the invention are shown in black and white. However, it does not mean that the invention is limited to embodiments that have only two colors, in particular black and white. Embodiments of the invention include two-color securing elements, different than shown black and white embodiments, and also include multicolored variants. For example, pixels of three colors may be mapped with a black line passing through the pixel center and sloped relative to the edge of the securing element, for example, at an angle of +30 degrees for a first color, +90 degrees for a second color, and -30 degrees for a third color, respectively. Or, for example, pixels of four colors may be mapped by means of four different graphical symbols having one color and located on a background of another color, for instance, triangles, pentagons, circles, and squares.

### List of References

- 1: data carrier
- 10: initial picture
- 10': initial picture
- 12: picture of the spatial frequencies for an initial picture
- 12': picture of the spatial frequencies for an initial picture
- 20: picture/matrix with the hidden picture after thresholding
- 20p: pixel of a first color
- 20d: pixel of a second color
- 22: matrix of sub-pictures of a first embodiment
- 22p: first sub-picture of a first embodiment
- 22d: second sub-picture of a first embodiment
- 24: matrix of sub-pictures of a second embodiment
- 24p: first sub-picture of a second embodiment
- 24d: second sub-picture of a second embodiment
- 30: matrix of sub-pictures of a third embodiment
- 30p: first sub-picture of a third embodiment
- 30n: non-printed spot
- 40: matrix of sub-pictures of a fourth embodiment
- 40p: first sub-picture of a fourth embodiment
- 40n: non-printed spot
- 50: matrix of sub-pictures of a fifth embodiment
- 50p: first sub-picture of a fifth embodiment
- 50d: second sub-picture of a fifth embodiment
- 60: matrix of sub-pictures of a sixth embodiment
- 60p: first sub-picture of a sixth embodiment
- 60d: second sub-picture of a sixth embodiment
- 70: picture with a hidden picture
- 80: hidden picture
- 80': hidden picture
- 90: final picture
- 90.1: final picture of a first embodiment
- 90.1': final picture of a first embodiment as a negative
- 90.2: final picture of a second embodiment
- 90.3: final picture of a third embodiment
- 90.3': final picture of a third embodiment as a negative
- 90.4: final picture of a fourth embodiment
- 90.5: final picture of a fifth embodiment
- 90.6: final picture of a sixth embodiment
- 90.7: final picture in the form of a clip
- 90.8: final single-color picture
- 90.8': final two-color picture
- 100: security element
- 100': security element constituting a secured background
- 100": security element constituting a filling

## Claims

1. A security element composed of a final picture, the spatial frequencies of which comprise a hidden picture, and the final picture has the form of a matrix of sub-pictures, created from the matrix with the hidden picture after the thresholding, consisting of at least two color pixels arranged such that, when reading in the frequency space, the hidden picture is presented, where every pixel in the matrix with the hidden picture after the thresholding is mapped with a particular sub-picture, and all the pixels of the same color included in the matrix with the hidden picture after the thresholding are mapped with the same sub-picture.

2. The security element according to claim 1, **characterized in that** colored pixels are pixels of different colors and/or single-color pixels but of different shades of the same color and/or single-color pixels but of another gray shade and/or black and white pixels.

3. The security element according to claims 1 or 2, **characterized in that** the matrix with the hidden picture after the thresholding is two-color, and every pixel of the first color constitutes the first sub-picture, and every pixel of the second color constitutes the second sub-picture.

4. The security element according to claims 1 or 2, or 3, **characterized in that** the sub-picture may be a vector line tilted by a given angle, a vector picture, a shape, an alphanumerical symbol, or any graphical elements.

5. The security element according to claim 1, **characterized in that** the same sub-pictures, which are mapping the same color, are modified from each other.

6. The security element according to claim 5, **characterized in that** the same sub-pictures assigned to the same color are placed in the matrix of sub-pictures in the same way and/or are arranged differently and/or have different areas and/or are turned by different angles, or are non-printed spots.

7. The security element according to claim 1, **characterized in that** pixels in the matrix of sub-pictures, which are of different colors, have the same sub-pictures but are turned by different angles, where different angles denote, respectively, different colors.

8. The security element according to claim 1, **characterized in that** sub-picture has the form of at least one line of a particular color selected from a color range on a background of another color selected from a color range, and the line may have a different slope angle, and the slope angle corresponds, respectively, to the pixel color.

9. The security element according to claim 2, **characterized in that** every black pixel constitutes the first sub-picture, and every white pixel constitutes the second sub-picture.

10. The security element according to claim 9, **characterized in that** a black pixel is mapped with a first sub-picture, whereas a white pixel is mapped with a second sub-picture as a non-printed spot, or the white pixel is mapped with the second sub-picture, whereas the black pixel is mapped with the second sub-picture as a non-printed spot.

11. The security element according to claim 1, **characterized in that** the sub-picture is constituted by more than one graphical element, and the total area of the graphical elements in the first sub-picture is higher than the total area of the elements in the second sub-picture.

12. The security element according to claim 1, **characterized in that** every pixel has a pseudorandomly generated value from a predefined range of natural numbers, and every natural number from the predefined range represents another pixel color, wherein the matrix code defines the hidden picture, every pixel of the frequency space is modified according to the pixel value of the hidden picture so that when the hidden picture pixels are of a first color selected from a color range, then no modification of the frequency space occurs, and when the hidden picture pixels are of a second color selected from the color range, pixels of the hidden picture are brightened, and each of the intermediate tones of the grayscale has increased frequency of the signal in the frequency space according to a proportional function.

13. The security element according to claim 1, **characterized in that** the hidden picture is black and white.

14. The security element according to claim 1, **characterized in that** the final picture has the form of a negative.

15. A data carrier containing the security element defined in claims 1 to 14.
